# EUROPÄISCHE PATENTSCHRIFT

(11) **EP 1 557 639 B1**
(45) Veröffentlichungstag und Bekanntmachung des Hinweises auf die Patenterteilung: **07.02.2007**
(21) Anmeldenummer: 04025479.9
(22) Anmeldetag: 27.10.2004
(51) Int. Cl.: G01B 7/012

(54) **Tastsystem und Verfahren zum Betreiben eines Tastsystems**
Probing system and method for operating it
Système palpeur et procédé pour le faire fonctionner

(30) Priorität: 23.01.2004 DE 102004003487
(43) Veröffentlichungstag der Anmeldung: 27.07.2005
(73) Patentinhaber: Dr. Johannes Heidenhain GmbH, 83292 Traunreut (DE)
(72) Erfinder: Gröll, Klaus, 83329 Waging (DE)

(56) Entgegenhaltungen:
- WO-A1-00/70298
- US-A- 5 836 981

## Beschreibung

Die Erfindung betrifft ein Tastsystem gemäß dem Anspruch 1 und ein Verfahren zum Betreiben eines Tastsystems gemäß dem Anspruch 10.

Derartige Tastsysteme werden beispielsweise zur Positionsbestimmung von Werkstücken verwendet, die in materialbearbeitenden Maschinen, z. B. Fräsmaschinen, eingespannt sind. Diese Tastsysteme weisen häufig eine stationäre Sender-Empfängereinheit auf, welche an einem ortfesten Element der materialbearbeitenden Maschine befestigt ist und ein relativ dazu bewegliches bzw. mobiles Teil, welches häufig als Tastkopf bezeichnet wird, das an einem beweglichen Element der materialbearbeitenden Maschine, etwa an einer Frässpindel angebracht ist. Dabei umfasst der Tastkopf einen aus einer Ruheposition auslenkbaren Taststift, bzw. ein auslenkbares Tastelement, welches bei einer Auslenkung aus seiner Ruheposition heraus ein Schaltsignal erzeugt. Unter der Ruheposition des Tastelementes wird eine Position des Tastelementes verstanden, in der es keinen Kontakt mit einem Werkstück hat. Bei Kontakt des Tastelementes mit dem Werkstück wird das Tastelement aus seiner Ruheposition heraus ausgelenkt.

Bei sogenannten kabellosen Tastsystemen wird das entsprechende Schaltsignal vom Tastkopf als elektromagnetisches Signal, insbesondere als Infrarotsignal, an die stationäre Sender-Empfängereinheit übertragen. In dieser werden die Ausgangssignale des Tastsystems ausgewertet, um das Auftreten von Schaltsignalen (also eine Auslenkung des Tastelementes) festzustellen.

Ein derartiger Tastkopf weist häufig zu dessen Energieversorgung eine Gleichstromquelle in Form von einer oder mehrerer Batterien auf. Es besteht der permanente Wunsch die Verfügbarkeit von derartigen Tastsystemen zu erhöhen, weshalb versucht wird die Standzeit der Gleichstromquellen zu maximieren. Aus diesem Grund befindet sich der Tastkopf üblicherweise außerhalb der Messbetriebszeiten in einem Stand-By-Zustand.

In der EP 1 179 173 B1 wird beispielsweise ein batteriebetriebener Tastkopf angegeben, bei dem durch verschiedene Maßnahmen die Lebensdauer der Batterien verlängert werden soll, was letztlich die Verfügbarkeit des entsprechenden Tastsystems wegen seltenerer Stillstandszeiten infolge verbrauchter Batterien verbessert.

Damit darüber hinaus die Verfügbarkeit erhöht werden kann, wird häufig die Standzeit durch Verwendung von hochwertigen aber teuren Batterien, zum Beispiel Lithium-Batterien, verlängert. Derartige Batterien haben allerdings nur eine relativ begrenzte Lagerfähigkeit, weil auf Grund von Passivierungseffekten diese Batterien nach einer gewissen Zeit nicht mehr die Nennspannung liefern. Wenn nun ein Tastkopf, nach einer angestrebten langen Betriebszeit, mit derartigen zu lange gelagerten Batterien bestückt wird, kann dieser nicht in Betrieb genommen werden. Im folgenden wird im Übrigen unter Batterie sowohl eine nicht wiederaufladbare Batterie als auch ein aufladbarer Akku verstanden.

Der Erfindung liegt unter anderem die Aufgabe zugrunde, ein Tastsystem bzw. ein Verfahren zum Betreiben eines Tastsystems zu schaffen, bei welchem die Verfügbarkeit eines Tastsystems erhöht wird.

Diese Aufgabe wird erfindungsgemäß durch die Merkmale des Anspruches 1 bzw. des Anspruches 10 gelöst.

Erfindungsgemäß weist das Tastsystem unter anderem einen mobilen Tastkopf mit einer Schaltung auf, die derart gestaltet ist, dass zwischen einer Gleichspannungsquelle und einer Sendestufe ein Spannungswandler geschaltet ist, durch den eine an der Sendestufe anliegende Spannung erzeugbar ist, die größer ist als die Ausgangsspannung der Gleichspannungsquelle.

Mit Vorteil umfasst das Tastsystem eine Gleichspannungsquelle mit mindestens einer Batterie.

In einer bevorzugten Ausgestaltung der Erfindung wird auch unterhalb eines Wertes der Spannung von 5 V, insbesondere auch unterhalb von 3 V am Ausgang der Gleichspannungsquelle durch den Spannungswandler eine an der Sendestufe anliegende Spannungen erzeugt, die so hoch ist, dass mit dieser' die Sendestufe sicher betrieben werden kann. Mit Vorteil ist der Spannungswandler so ausgestaltet, dass dieser auch bei einer Spannung am Ausgang der Gleichspannungsquelle, die weniger als 1 V beträgt, noch eine an der Sendestufe anliegende Spannungen erzeugt, die es gestattet die Sendestufe zu betreiben.

In weiterer vorteilhafter Ausgestaltung der Erfindung kann bei einem beliebigen Wert zwischen 5 V und 16 V der Spannung am Ausgang der Gleichspannungsquelle, insbesondere zwischen 1 V und 16 V, durch den Spannungswandler eine an der Sendestufe anliegende Spannungen erzeugt werden, die so hoch ist, dass mit dieser die Sendestufe sicher betrieben werden kann.

In einer bevorzugten Ausgestaltung der Erfindung ist die an der Sendestufe anliegende Spannung am Ausgang des Spannungswandlers zur Herstellung eines Messbetriebsmodus auf ein erstes Spannungspotenzial und zur Herstellung eines Stand-By-Modus auf ein zweites Spannungspotenzial veränderbar.

Ein Vorteil der erfindungsgemäßen Schaltung ist es, dass nunmehr auch lange gelagerte Batterien, die beispielsweise durch Passivierungseffekte nicht mehr ihre eigentliche Nennspannung liefern, problemlos zum Betreiben eines Tastsystems eingesetzt werden können. Hinzu kommt, dass nach dem Inbetriebsetzen des Tastkopfes mit derartigen Batterien die Passivierung rückgebildet wird, so dass die Schaltung nach einer gewissen Einlaufphase mit überaus hohem Wirkungsgrad betrieben werden kann.

Überdies hat der Betreiber eines derartigen neuen Tastsystems die Möglichkeit verschiedenste Batterietypen mit unterschiedlichen Nennspannungen einzusetzen, was sich positiv auf die Verfügbarkeit des Tastsystems und auf die Lagerhaltung der Batterien auswirkt.

Das erfindungsgemäße Tastsystem hat außerdem den wichtigen Vorteil, dass die Batterien länger nutzbar sind, bzw. dass mehr Energie der Batterien nutzbar ist, weil auch nach einem Abfall der Nennspannung der Batterie eine Fortführung des Betriebs des Tastsystems möglich ist.

Durch die erfindungsgemäße Lösung kann also die Verfügbarkeit eines Tastsystems erhöht werden, weil einerseits durch eine bessere Nutzung des Energiepotenzials der Gleichspannungsquelle Stillstandszeiten infolge eines Batteriewechsels nur in vergleichsweise großen Zeitabständen auftreten. Darüber hinaus können verschiedenste Batterietypen oder ggf. bereits zu lange gelagerte Batterien eingesetzt werden, wodurch Komplikationen beim Batteriewechsel vermieden werden können. Auch hierdurch wird letztlich die Verfügbarkeit der erfindungsgemäßen Tastsysteme im Vergleich zu herkömmlichen Systemen signifikant erhöht, bzw. es werden die Stillstandsoder Rüstzeiten reduziert.

Vorteilhafte Ausbildungen der Erfindung entnimmt man den abhängigen Ansprüchen.

Weitere Einzelheiten und Vorteile des erfindungsgemäßen Tastsystems ergeben sich aus der nachfolgenden Beschreibung von Ausführungsbeispielen anhand der beiliegenden Figuren.

Es zeigen die
- Figur 1: eine schematische Darstellung des Tastsystems,
- Figur 2: ein schematischer Schaltungsplan für ein erstes Ausführungsbeispiel,
- Figur 3: ein schematischer Schaltungsplan für ein zweites Ausführungsbeispiel,
- Figur 4: ein schematischer Schaltungsplan für einen Spannungswandler.

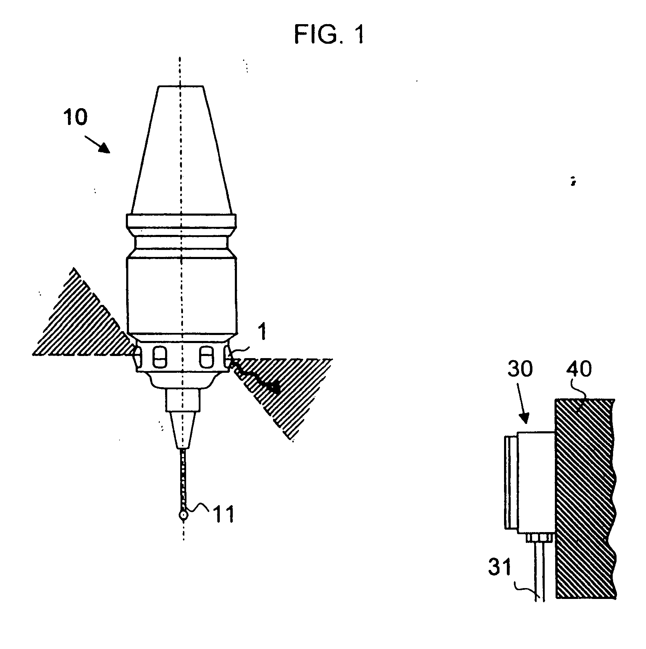

In der Figur 1 ist ein Tastkopf 10 gezeigt, der mittels eines Spannkonus in eine Werkzeugmaschine eingespannt werden kann. Für den Messzweck ist am Tastkopf 10 ein zylindrischer Taststift 11 vorgesehen, welcher an einem Ende eine Antastkugel aufweist.

Ferner umfasst das Tastsystem eine Sender-Empfängereinheit 30, welche an einem unbeweglichen Bauteil 40 der Werkzeugmaschine fixiert ist, so dass also der Tastkopf 10 gegenüber der Sender-Empfängereinheit 30 mobil, also relativ zu diesem beweglich ist.

Im gezeigten Ausführungsbeispiel sind über den Umfang des Tastkopfes 10 verteilt sechs Sende/Empfangselemente 1 vorgesehen, die jeweils um 60° entlang einer Umfangslinie am Tastkopf 10 versetzt befestigt sind. Mit Hilfe der Sende/Empfangselemente 1 können elektromagnetische Signale, hier Infrarot-Signale, ausgesendet werden, welche von der Sender-Empfängereinheit 30 empfangen werden können. Ebenso ist eine entsprechende Kommunikation ausgehend von der Sender-Empfängereinheit 30 zu den Sende-Empfangselementen 1 am Tastkopf 10 möglich.

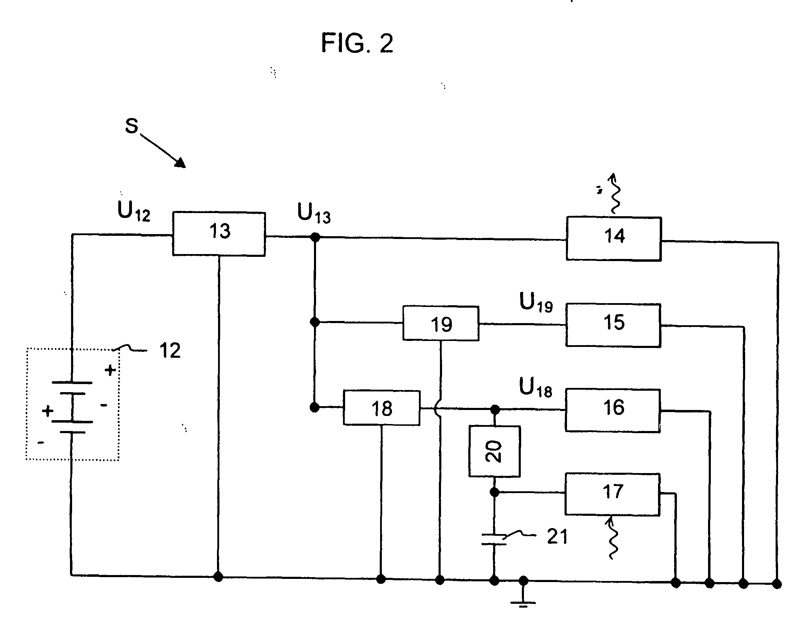

In der Figur 2 ist ein stark vereinfachtes Schaltbild einer Schaltung S gezeigt, wie sie gemäß dem ersten Ausführungsbeispiel innerhalb des Tastkopfes 10 auf einer Leiterplatte angeordnet ist. Dementsprechend umfasst die Schaltung S eine Gleichspannungsquelle 12, die im gezeigten Ausführungsbeispiel aus zwei Lithium-Batterien mit jeweils einer Nennspannung von 3,6 V besteht. Die Lithium-Batterien sind in Reihe geschaltet, so dass die Gleichspannungsquelle 12 im Idealfall eine Spannung U₁₂ von 7,2 V abgibt. Der negative Pol der Gleichspannungsquelle 12 ist dabei mit Masse verbunden. Die Gleichspannungsquelle 12 dient zur Energieversorgung von unter anderem einer Sensoreinheit 15, einer CPU 16, einer Sendestufe 14 und einer Empfangsstufe 17. Ferner umfasst die Schaltung S eine RC-Siebungsschaltung, bestehend aus einem Widerstand 20 und einem Kondensator 21.

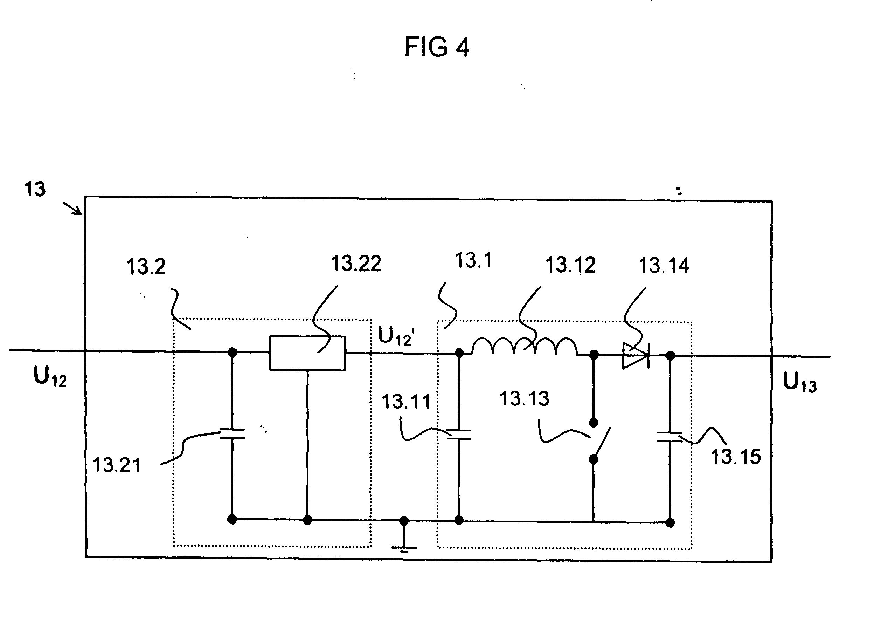

Zwischen der Gleichspannungsquelle 12 und der Sendestufe 14 ist ein Spannungswandler 13 geschaltet. Der Spannungswandler 13 umfasst gemäß der Figur 4 eine sogenannte Boost-Schaltung 13.1 und einen der Boost-Schaltung 13.1 vorgeschalteten Spannungsbegrenzer 13.2, an dem als Eingangsspannung die Spannung U₁₂ anliegt.

Die Boost-Schaltung 13.1 umfasst ihrerseits einen Kondensator 13.11, eine Induktivität 13.12, einen Schalter 13.13, sowie eine Diode 13.14 und einen weiteren Kondensator 13.15. Diese Bauelemente sind gemäß der Figur 4 verschaltet, so dass durch die Boost-Schaltung 13.1 bei entsprechender Bewegung des Schalters 13.13 eine Spannung U₁₃ erzeugbar ist, die über einer Eingangsspannung U₁₂' am Ausgang des Spannungsbegrenzers 13.2 liegen kann.

Damit bei überhöhter Spannung U₁₂ eine Beschädigung der Boost-Schaltung 13.1 vermieden wird, ist der Boost-Schaltung 13.1 der Spannungsbegrenzer 13.2 vorgeschaltet, welcher einen Kondensator 13.21 und einen Spannungsregler 13.22 umfasst. Durch den Spannungsbegrenzer 13.2 wird also die Boost-Schaltung 13.1 vor übermäßig hohen Spannungen U₁₂ geschützt, bzw. es wird sichergestellt, dass die Spannung U₁₂' am Ausgang des Spannungsbegrenzers 13.2 nicht über die zulässige Eingangsspannung der Boost-Schaltung 13.1 steigen kann.

Alternativ dazu kann aber auch ein Spannungswandler 13 vorgesehen werden, der keinen Spannungsbegrenzer 13.2 aufweist.

Gemäß der Figur 2 umfasst die Schaltung S darüber hinaus noch zwei weitere Spannungsbegrenzer 18, 19, welche Ausgangsspannungen U₁₈, U₁₉ liefern, die gleichzeitig jeweils als Eingangspannung für die Sensoreinheit 15 bzw. für die CPU 16 dienen. Da der elektrische Strom, der durch den Widerstand 20 fließt sehr gering ist, kann in guter Näherung die Eingansspannung in die Empfangsstufe 17 mit der Spannung U₁₈ gleichgesetzt werden.

Um den Tastkopf 10 von einem batteriesparenden Stand-By-Modus in einen Messbetriebsmodus zu überführen, wird von der stationären Sende-Empfangseinheit 30 ein entsprechendes Aktivierungssignal (Infrarotsignal) abgesetzt. Das Aktivierungssignal wird von der Empfangsstufe 17 des Tastkopfes 10 von einem Infrarotsignal in ein elektrisches Signal umgewandelt, dieses wird dann zur CPU 16 weitergeleitet. Von der CPU 16 gehen darauf entsprechende Befehle an die relevanten Bauteile im Tastkopf 10, so dass das Tastsystem bzw. der Tastkopf in den Messbetriebsmodus überführt wird.

Wenn im Messbetriebsmodus der Taststift 11 ausgelenkt wird, so wird in der Sensoreinheit 15 ein digitales Signal erzeugt (Änderung eines Spannungspegels von High auf Low). Dieses Signal wird an die CPU 16 weitergeleitet und dort weiterverarbeitet. Das durch die CPU weiterverarbeitete Signal wird sodann an die Sendestufe 14 geleitet, welche das Sendesignal in Form von elektromagnetischen Strahlen bzw. Signalen erzeugt. Im gezeigten Ausführungsbeispiel sind die elektromagnetischen Signale als Infrarot-Signale ausgebildet, es können aber beispielsweise auch Funksignale verwendet werden. Die Signale werden von der stationären Sende-Empfangseinheit 30 empfangen. Im Inneren der Sender-Empfängereinheit 30 werden die Infrarot-Signale in elektrische Signale umgewandelt und aufbereitet. Letztlich gelangen die aufbereiteten elektrischen Signale über ein Kabel 31 in eine ortsfeste Folgeelektronik, wo sie weiterverarbeitet werden.

Nach einer gewissen Betriebszeit ist die Energie der Gleichspannungsquelle 12 erschöpft und es müssen die Batterien getauscht werden. Insbesondere bei Lithium-Batterien kommt es häufig vor, dass diese im Laufe ihrer Lagerungszeit passiviert sind, und deshalb nicht mehr ihre Nennspannung von jeweils 3,6 V liefern. Beispielsweise kann unmittelbar zu Beginn der WiederInbetriebnahme der Gleichspannungsquelle 12 mit den getauschten passivierten Batterien lediglich eine Spannung U₁₂ von weniger als 5 V abgegeben werden. Die Sendestufe 14 benötigt aber für einen einwandfreien Betrieb eine Eingangsspannung U₁₃ von mehr als 5 V, im vorgestellten Ausführungsbeispiel liegt die minimale Betriebssollspannung für die Sendestufe 14 bei 5,5 V. Durch den Spannungswandler 13 wird nun die Spannung U₁₂, die in dieser Phase des Ausführungsbeispiels 4,5 V betragen soll auf U₁₃ = 5,5 V erhöht. Somit kann das Tastsystem auch mit den passivierten Batterien in Betrieb gehen. Wenn jetzt die Gleichspannungsquelle 12 über eine gewisse Betriebszeit des Tastkopfes 10 belastet wird, werden die Passivierungseffekte der Lithium-Batterien wieder rückgängig gemacht, so dass die Spannung U₁₂ wieder stetig ansteigt. Für den Fall, dass die Spannung U₁₂ der Gleichspannungsquelle 12 über die eingestellten 5,5 V ansteigt, wird diese Spannung vom Spannungswandler 13 unverändert durchgelassen, so dass in diesem Fall der Wert der Spannung U₁₂ gleich dem Wert der Spannung U₁₃ ist. Eine Spannung U₁₃ über 5,5 V bishin zu den mit zwei Lithium-Batterien maximal erreichbaren 7,6 V bereite als Eingangsspannung für den Betrieb der Sendestufe 14 im Übrigen keine Schwierigkeiten.

Für den Betrieb des Tastsystems am Ende der Lebensdauer der Lithium-Batterien, wenn also die Gleichspannungsquelle 12 eine Spannung U₁₂ liefert, die wiederum unterhalb von 5,5 V liegt, wird der Spannungswandler 13 die Spannung U₁₂ der Gleichspannungsquelle 12 auf die Spannung U₁₃ = 5,5 V (laut Vorgabe) erhöhen. Dadurch wird die mögliche Gebrauchszeit der Lithium-Batterien im Vergleich zu herkömmlichen Tastsystemen erhöht. Durch die längere Nutzbarkeit der Batterien werden die Betriebsintervalle verlängert und somit die Verfügbarkeit des Tastsystems erhöht.

In den Betriebszuständen in denen die Gleichspannungsquelle 12 eine Spannung U₁₂ kleiner als 5,5 V liefert, wird also durch den Spannungswandler 13 eine an der Sendestufe 14 anliegende Spannung U₁₃ erzeugt, die größer ist als die Ausgangsspannung U₁₂ der Gleichspannungsquelle 12.

Durch einen Spannungsbegrenzer 19 wird die Spannung U₁₃ = 5,5 V auf eine Spannung U₁₉ = 5 V reduziert, wie sie für den Betrieb der Sensoreinheit 15 erforderlich ist. Neben der Funktion der Spannungsreduzierung weist der Spannungsbegrenzer 19 überdies die Eigenschaft auf die am Eingang der Sensoreinheit 15 anliegende Spannung U₁₉ zu glätten, was für das Messverhalten des Tastsystems von erheblicher Bedeutung ist.

Die CPU 16 und die Empfangsstufe 17 wird mit einer Spannung U₁₈ von 2,5 V versorgt. Deshalb ist ein entsprechender Spannungsbegrenzer 18, welcher die Spannung U₁₃ = 5,5 V auf 2,5 V reduziert, der CPU 16 und der Empfangsstufe 17 vorgeschaltet.

Wenn nun das Tastsystem nach dem Messbetriebsmodus in einen Stand-By-Modus überführt werden soll, wird der Spannungswandler 13 so geschaltet, dass dieser eine Spannung U₁₃ von lediglich 3 V ausgibt, so dass die Verlustleistung der Schaltung S vermindert wird, und somit die Lebensdauer der Batterien erhöht wird. Gleichzeitig wird aus denselben Gründen der Spannungsbegrenzer 19 so geschaltet, dass dieser keinen Strom durchlässt, so dass quasi die Sensoreinheit 15 abgeschaltet ist. Die Ausgangspannung U₁₃ des Spannungswandlers 13 wird also zur Herstellung eines Messbetriebsmodus auf einen ersten Wert (hier 5,5 V), und zur Herstellung eines Stand-By-Modus auf einen zweiten Wert (hier 3 V) eingestellt, wobei entsprechend der erste Wert größer ist als der zweite Wert. Mit anderen Worten ausgedrückt, wird das Tastsystem nach dem Messbetriebsmodus in einen Stand-By-Modus überführt wird, wobei die Ausgangspannung U₁₃ des Spannungswandlers 13 zur Herstellung des Stand-By-Modus auf einen Wert (hier 3 V) eingestellt wird, der kleiner ist als der entsprechende Wert (hier 5,5 V) im Messbetriebsmodus.

Wenn die Batterien der Gleichspannungsquelle 12 endgültig verbraucht sind, können wiederum zwei Lithium-Batterien, aber auch Batterien mit einer anderen Nennspannung in das Batteriefach des Tastkopfes 10 eingelegt werden. Beispielsweise können zwei Alkali-Batterien mit einer Nennspannung von jeweils 1,5 V als Gleichspannungsquelle 12 verwendet werden, so dass eine Spannung U₁₂ von 3 V erzeugt wird. Durch den Spannungswandler 13 wird diese Spannung U₁₂ auf die Spannung U₁₃ = 5,5 V erhöht. Die Gleichspannungsquelle 12 kann aber auch einen oder mehrere wiederaufladbare Akkus umfassen, so dass beispielsweise die Spannung U₁₂ bei zwei frisch aufgeladenen Akkus dann 2,88 V beträgt. Während des Entladevorgangs der Akkus wird die Spannung U₁₂ kleiner, wobei durch die Schaltung S trotzdem die Spannung U₁₃ weitgehend konstant bei 5,5 V bleibt. Erst ab einem Wert der Spannung U₁₂ am Ausgang der Gleichspannungsquelle 12 von weniger als 0,8 V ist der Spannungswandler 13 nicht mehr in der Lage die vorgegebenen 5,5 V zu liefern, und es muss ein Batteriewechsel vorgenommen werden. Falls also ein Batteriewechsel erforderlich ist, können verschiedene Batterietypen oder auch bereits passivierte Batterien im Tastsystem eingesetzt werden. Diese Eigenschaft führt zu einer Erhöhung der Verfügbarkeit des Tastsystems, weil der Tastkopf 10 wieder inbetrieb genommen werden kann, auch wenn nicht die ursprünglichen Batterien auf Lager sind, oder die gelagerten Batterien nicht die für herkömmliche Systeme erforderliche Nennspannung liefern.

Das Tastsystem kann aus den bereits erläuterten Gründen über einen überaus weiten Bereich der Spannung U₁₂ am Ausgang der Gleichspannungsquelle 12 betrieben werden. Ab einer Spannung U₁₂ von mehr als 16 V würde der, Spannungsbegrenzer 13.2 des Spannungswandlers beschädigt werden, so dass bei der gezeigten Schaltung Spannungen U₁₂ am Ausgang der Gleichspannungsquelle 12 von mehr als 16 V nicht zulässig sind, bzw. bei derart hohen Spannungen U₁₂ die Sendestufe 14 nicht mehr betrieben werden kann.

Im gezeigten Ausführungsbeispiel kann das Tastsystem also im gesamten Bereich der Spannung U₁₂ am Ausgang der Gleichspannungsquelle 12 zwischen 0,8 V und 16 V betrieben werden, wobei dann durch den Spannungswandler 13 eine an der Sendestufe 14 anliegende Spannung U₁₃ (=5,5 V) erzeugt wird, die mit 5,5 V so hoch ist, dass mit dieser die Sendestufe 14 sicher betrieben werden kann.

Durch den Spannungswandler 13 ist gewährleistet, dass die Spannung U₁₃ innerhalb des oben beschriebenen Bereichs mindestens 5,5 V beträgt. Deshalb ist auch sichergestellt, dass die Eingangsspannung U₁₉ der Sensoreinheit 15 durch den Spannungsbegrenzer 19 auf die erforderlichen 5 V reduzierbar ist.

Eine analoge Betrachtung gilt auch für die Spannungsversorgung der CPU 16 sowie der Empfangsstufe 17. Auch hier ist eine Reduktion der Spannung U₁₃ auf erforderliche Eingangsspannung U₁₈ von 2,5 V durch den Spannungsbegrenzer 18 stets erreichbar. Der Spannungsbegrenzer 18 hat auch die Eigenschaft, die Spannung U₁₈ gegenüber der Spannung U₁₃ zu glätten, was für den Betrieb der CPU 16 von großem Vorteil ist.

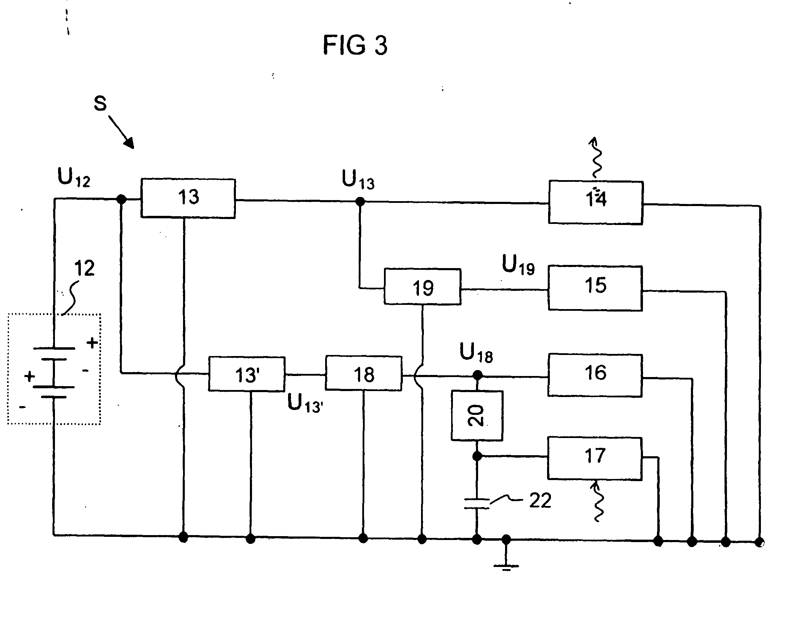

In einem weiteren Ausführungsbeispiel der Schaltung S liegt gemäß der Figur 3 die Spannung U₁₂ sowohl am Spannungswandler 13 als auch an einem weiteren Spannungswandler 13' an. Der Spannungswandler 13' ist im Prinzip ebenso aufgebaut wie der Spannungswandler 13 und erfüllt auch die gleiche Funktion, er ist aber auf eine Ausgangsspannung U₁₃' eingestellt, die 3,3 V beträgt. Wenn nun die Gleichspannungsquelle 12 beispielsweise eine Spannung U₁₂ von 2,88 V liefert, wird diese durch den Spannungswandler 13' auf 3,3 V erhöht. Wenn im Laufe des Betriebs die Spannung U₁₂ unter einen Wert von 2,5 V abfällt, so wird diese durch den Spannungswandler 13' bei U₁'₃' = 3,3 V gehalten. In beiden Fällen wird durch den Spannungsbegrenzer 18 die Spannung U₁₃ auf die erforderliche Eingangsspannung U₁₈ von 2,5 V reduziert. Die Reduzierung führt zu einer Glättung der Eingangsspannung U₁₈. Gleichzeitig gewährleistet der andere Spannungswandler 13 eine Erhöhung der Spannung auf U₁₃ = 5,5 V. Durch diese Anordnung kann der Gesamtwirkungsgrad der Schaltung S erhöht werden.

Alternativ zu dem oben beschriebenen Spannungswandler 13 kann auch zum gleichen Zweck ein sogenanntes SEPIC-Element verwendet werden. Das SEPIC-Element hat die Eigenschaft, dass die vorgegebene Ausgangsspannung auch nach oben hin nicht verändert wird, das heißt, wenn bei einem SEPIC-Element eine Ausgangsspannung von 5,5 V vorgegeben ist, wird diese Spannung nicht unterschritten, wenn die entsprechende Eingangsspannung kleiner als 5,5 V ist, sie wird aber auch nicht überschritten, wenn die entsprechende Eingangsspannung größer als 5,5 V ist. Dieses Verhalten ist besonders Vorteilhaft unter dem Gesichtspunkt der Reduzierung der Verlustleistung, bzw. zur Erhöhung des Wirkungsgrades der Schaltung S und damit der Verbesserung der Verfügbarkeit des gesamten Tastsystems.

Durch die erfindungsgemäße Schaltung kann die Lagerhaltung für Batterien erheblich vereinfacht werden, weil einerseits lange gelagerte Batterien keine Schwierigkeiten bereiten und andererseits unterschiedliche Batterietypen einsetzbar sind.

## Patentansprüche

1. Tastsystem, bestehend aus einer Sender-Empfängereinheit (30) und einem gegenüber der Sender-Empfängereinheit (30) mobilen Tastkopf (10) mit einem Taststift (11), wobei der Tastkopf (10) eine Schaltung (S) aufweist, die
· eine Sensoreinheit (15),
· eine CPU (16),
· eine Sendestufe (14), und
· eine Gleichspannungsquelle (12) zur Energieversorgung der Sensoreinheit (15), der CPU (16), und der Sendestufe (14) umfasst,
wobei bei einer Auslenkung des Taststifts (11) von der Sensoreinheit (15) ein elektrisches Signal auslösbar ist, welches in der Sendestufe (14) in ein elektromagnetisches Signal umwandelbar ist, das von der Sender-Empfängereinheit (30) empfangbar ist,
**dadurch gekennzeichnet, dass** die Schaltung (S) derart gestaltet ist, dass zwischen der Gleichspannungsquelle (12) und der Sendestufe (14) ein Spannungswandler (13) geschaltet ist, durch den eine an der Sendestufe (14) anliegende Spannung (U₁₃) erzeugbar ist, die größer ist als die Ausgangsspannung (U₁₂) der Gleichspannungsquelle (12).

2. Tastsystem gemäß dem Anspruch 1, **dadurch gekennzeichnet, dass** die Gleichspannungsquelle (12) mindestens eine Batterie umfasst.

3. Tastsystem gemäß dem Anspruch 1 oder 2, **dadurch gekennzeichnet, dass** auch unterhalb eines Wertes der Spannung (U₁₂) von 5 V, insbesondere auch unterhalb von 3 V, am Ausgang der Gleichspannungsquelle (12) durch den Spannungswandler (13) eine an der Sendestufe (14) anliegende Spannungen (U₁₃) erzeugbar ist, mit der die Sendestufe (14) betreibbar ist.

4. Tastsystem gemäß dem Anspruch 1 oder 2, **dadurch gekennzeichnet, dass** bei einem beliebigen Wert der Spannung (U₁₂) am Ausgang der Gleichspannungsquelle (12) zwischen 5 V und 16 V, insbesondere zwischen 3 V und 16 V, durch den Spannungswandler (13) eine an der Sendestufe (14) anliegende Spannungen (U₁₃) erzeugbar ist, mit der die Sendestufe (14) betreibbar ist.

5. Tastsystem gemäß einem der vorhergehenden Ansprüche, **dadurch gekennzeichnet, dass** die Ausgangspannung (U₁₃) des Spannungswandlers (13) zur Herstellung eines Messbetriebsmodus auf einen ersten Wert, und zur Herstellung eines Stand-By-Modus auf einen zweiten Wert einstellbar ist, wobei der erste Wert größer ist als der zweite Wert.

6. Tastsystem gemäß einem der vorhergehenden Ansprüche, **dadurch gekennzeichnet, dass** die Schaltung (S) derart gestaltet ist, dass zwischen der Gleichspannungsquelle (12) und der CPU (16) ein Spannungswandler (13) und ein Spannungsbegrenzer (18) geschaltet sind, wobei der Spannungsbegrenzer (18) zur Reduzierung der Eingangsspannung der CPU (16) zwischen dem Spannungswandler (13) und der CPU (16) geschaltet ist.

7. Tastsystem gemäß einem der vorhergehenden Ansprüche, **dadurch gekennzeichnet, dass** die Schaltung (S) derart gestaltet ist, dass zwischen Gleichspannungsquelle (12) und Sensoreinheit (15) ein Spannungswandler (13) und ein Spannungsbegrenzer (19) geschaltet ist, wobei der Spannungsbegrenzer (19) zur Reduzierung der Eingangsspannung der Sensoreinheit (15) zwischen dem Spannungswandler (13) und der Sensoreinheit (15) geschaltet ist.

8. Tastsystem gemäß einem der vorhergehenden Ansprüche, **dadurch gekennzeichnet, dass** der Sensoreinheit (15) ein Spannungsbegrenzer (19) vorgeschaltet ist, wobei durch den Spannungsbegrenzer (19) zur Herstellung eines Stand-By-Modus die elektrische Verbindung zwischen der Gleichspannungsquelle (12) und der Sensoreinheit (15) unterbrechbar ist.

9. Tastsystem gemäß einem der vorhergehenden Ansprüche, **dadurch gekennzeichnet, dass** der Spannungswandler (13) eine Boost-Schaltung (13.1) und einen Spannungsbegrenzer (13.2) umfasst, welcher die Boost-Schaltung (13.1) vor übermäßig hohen Spannungen (U₁₂) schützt.

10. Verfahren zum Betreiben eines Tastsystems, bei dem in einem Tastkopf (10) durch eine Gleichspannungsquelle (12)
· eine Sensoreinheit (15),
· eine CPU (16), und
· eine Sendestufe (14) mit Energie versorgt wird, wobei in einem Messbetriebsmodus bei einer Auslenkung eines am Tastkopf (10) befindlichen Taststifts (11) von der Sensoreinheit (15) ein elektrisches Signal ausgelöst wird, welches danach in der Sendestufe (14) in ein elektromagnetisches Signal umgewandelt wird, das nachfolgend von einer Sender-Empfängereinheit (30) empfangen wird,
**dadurch gekennzeichnet, dass** durch einen Spannungswandler (13) eine an der Sendestufe (14) anliegende Spannung (U₁₃) erzeugt wird, die größer ist als die Ausgangsspannung (U₁₂) der Gleichspannungsquelle (12).

11. Verfahren zum Betreiben eines Tastsystems gemäß dem Anspruch 10, **dadurch gekennzeichnet, dass** das Tastsystem nach dem Messbetriebsmodus in einen Stand-By-Modus überführt wird, wobei die Ausgangspannung (U₁₃) des Spannungswandlers (13) zur Herstellung des Stand-By-Modus auf einen Wert eingestellt wird, der kleiner ist als der entsprechende Wert im Messbetriebsmodus.

12. Verfahren zum Betreiben eines Tastsystems gemäß einem der Ansprüche 10 oder 11, **dadurch gekennzeichnet, dass** die vom Spannungswandler (13) erzeugte Spannung (U₁₃) durch einen Spannungsbegrenzer (19) auf eine verminderte Eingangsspannung (U₁₈) für die Sensoreinheit (15) reduziert wird.

13. Verfahren zum Betreiben eines Tastsystems gemäß dem Anspruch 11, **dadurch gekennzeichnet, dass** im Zuge des Überführens des Tastsystems in den Stand-By-Modus durch einen Spannungsbegrenzer (19) die elektrische Verbindung zwischen der Gleichspannungsquelle (12) und der Sensoreinheit (15) unterbrochen wird.

14. Verfahren zum Betreiben eines Tastsystems gemäß einem der Ansprüche 10, 11, 12 oder 13, **dadurch gekennzeichnet, dass** durch einen Spannungsbegrenzer (18) die Eingangsspannung (U₁₉) der CPU (16) reduziert wird.

15. Verfahren zum Betreiben eines Tastsystems gemäß einem der Ansprüche 10, 11, 12, 13 oder 14, **dadurch gekennzeichnet, dass** durch einen Spannungsbegrenzer (18) die Eingangsspannung (U₁₉) der Empfangsstufe (17) reduziert wird.

## Claims

1. Tracing system, comprising a transmitting-receiving unit (30) and a tracer head (10) which is mobile relative to the transmitting-receiving unit (30) and has a tracer pin (11), the tracer head (10) having a circuit (S) which comprises
- a sensor unit (15),
- a CPU (16),
- a transmitting stage (14), and
- a direct voltage source (12) for supplying energy to the sensor unit (15), the CPU (16) and the transmitting stage (14),
an electrical signal being able to be triggered by the sensor unit (15) upon deflection of the tracer pin (11), which signal can be converted in the transmitting stage (14) into an electromagnetic signal which can be received by the transmitting-receiving unit (30),
**characterised in that** the circuit (S) is configured in such a manner that a voltage transformer (13) is connected between the direct voltage source (12) and the transmitting stage (14), by means of which voltage transformer there can be produced a voltage (U₁₃) applied at the transmitting stage (14), said voltage being greater than the output voltage (U₁₂) of the direct voltage source (12).

2. Tracing system according to claim 1, **characterised in that** the direct voltage source (12) comprises at least one battery.

3. Tracing system according to claim 1 or 2, **characterised in that** even below a value of the voltage (U₁₂) of 5 V, in particular even below 3 V, a voltage (U₁₃), applied at the transmitting stage (14), can be produced at the output of the direct voltage source (12) by the voltage transformer (13), with which voltage (U₁₃) the transmitting stage (14) can be operated.

4. Tracing system according to claim 1 or 2, **characterised in that** with any value of the voltage (U₁₂) at the output of the direct voltage source (12) between 5 V and 16 V, in particular between 3 V and 16 V, a voltage (U₁₃), applied at the transmitting stage (14), can be produced, with which voltage (U₁₃) the transmitting stage (14) can be operated.

5. Tracing system according to one of the preceding claims, **characterised in that** the output voltage (U₁₃) of the voltage transformer (13) can be adjusted to a first value in order to produce a measuring operation mode, and to a second value in order to produce a standby mode, the first value being greater than the second value.

6. Tracing system according to one of the preceding claims, **characterised in that** the circuit (S) is configured in such a manner that a voltage transformer (13) and a voltage limiter (18) are connected between the direct voltage source (12) and the CPU (16), the voltage limiter (18) being connected between the voltage transformer (13) and the CPU (16) in order to reduce the input voltage of the CPU (16).

7. Tracing system according to one of the preceding claims, **characterised in that** the circuit (S) is configured in such a manner that a voltage transformer (13) and a voltage limiter (19) are connected between the direct voltage source (12) and the sensor unit (15), the voltage limiter (19) being connected between the voltage transformer (13) and the sensor unit (15) in order to reduce the input voltage of the sensor unit (15).

8. Tracing system according to one of the preceding claims, **characterised in that** a voltage limiter (19) precedes the sensor unit (15), the electrical connection between the direct voltage source (12) and the sensor unit (15) being able to be interrupted by the voltage limiter (19) in order to produce a standby mode.

9. Tracing system according to one of the preceding claims, **characterised in that** the voltage transformer (13) comprises a boost circuit (13.1) and a voltage limiter (13.2) which protects the boost circuit (13.1) from excessively high voltages (U₁₂).

10. Method for operating a tracing system, in which, in a tracer head (10)
- a sensor unit (15),
- a CPU (16), and
- a transmitting stage (14)
are supplied with energy by a direct voltage source (12), an electrical signal being triggered in a measuring operation mode by the sensor unit (15) upon deflection of a tracer pin (11) situated on the tracer head (10), which signal is thereafter converted in the transmitting stage (14) into an electromagnetic signal which is received subsequently by a transmitting-receiving unit (30),
**characterised in that** a voltage (U₁₃), applied at the transmitting stage (14), is produced by a voltage transformer (13), said voltage (U₁₃) being greater than the output voltage (U₁₂) of the direct voltage source (12).

11. Method for operating a tracing system according to claim 10, **characterised in that** the tracing system is transferred into a standby mode after the measuring operation mode, the output voltage (U₁₃) of the voltage transformer (13) being adjusted to a value, in order to produce the standby mode, which is smaller than the corresponding value in the measuring operation mode.

12. Method for operating a tracing system according to one of the claims 10 or 11, **characterised in that** the voltage (U₁₃) produced by the voltage transformer (13) is reduced by a voltage limiter (19) to a reduced input voltage (U₁₈) for the sensor unit (15).

13. Method for operating a tracing system according to claim 11, **characterised in that** in the course of transferring the tracing system into the standby mode, the electrical connection between the direct voltage source (12) and the sensor unit (15) is interrupted by a voltage limiter (19).

14. Method for operating a tracing system according to one of the claims 10, 11, 12 or 13, **characterised in that** the input voltage (U₁₉) of the CPU (16) is reduced by a voltage limiter (18).

15. Method for operating a tracing system according to one of the claims 10, 11, 12, 13 or 14, **characterised in that** the input voltage (U₁₉) of the receiving stage (17) is reduced by a voltage limiter (18).

## Revendications

1. Système de palpage constitué d'une unité d'émetteur-récepteur (30) et d'une tête de palpage (10) mobile par rapport à l'unité d'émetteur-récepteur (30) et comportant une tige de palpage (11), la tête de palpage (10) présentant un circuit (S) qui comprend
- une unité de détecteur (15),
- une unité centrale (16),
- un étage émetteur (14) et
- une source de tension continue (12) pour l'alimentation en énergie de l'unité de détecteur (15), de l'unité centrale (16) et de l'étage émetteur (14),
la déviation de la tige de palpage (11) provoquant le déclenchement, par l'unité de détecteur (15), d'un signal électrique qui peut être converti dans l'étage émetteur (14) en un signal électromagnétique pouvant être reçu par l'unité d'émetteur-récepteur (30),
**caractérisé par le fait que** le circuit (S) est agencé de manière telle qu'il comprend, entre la source de tension continue (12) et l'étage émetteur (14), un transformateur de tension (13) permettant de générer une tension (U₁₃) qui est appliquée à l'étage émetteur (14) et est supérieure à la tension de sortie (U₁₂) de la source de tension continue (12).

2. Système de palpage selon la revendication 1, **caractérisé par le fait que** la source de tension continue (12) comprend au moins une pile.

3. Système de palpage selon la revendication 1 ou 2, **caractérisé par le fait que** même en dessous d'une valeur de 5 V de la tension (U₁₂), en particulier également en dessous de 3 V, à la sortie de la source de tension continue (12), le transformateur de tension (13) peut produire une tension (U₁₃) qui est appliquée à l'étage émetteur (14) et permet de faire fonctionner l'étage émetteur (14).

4. Système de palpage selon la revendication 1 ou 2, **caractérisé par le fait que** pour une valeur quelconque de la tension (U₁₂), comprise entre 5 V et 16 V, notamment entre 3 V et 16 V, à la sortie de là source de tension continue (12), le transformateur de tension (13) permet de produire une tension (U₁₃) qui est appliquée à l'étage émetteur (14) et permet de faire fonctionner l'étage émetteur (14).

5. Système de palpage selon une des revendications précédentes, **caractérisé par le fait que** la tension de sortie (U₁₃) du transformateur de tension (13) peut être réglée à une première valeur, pour établir un mode de service de mesure, et à une deuxième valeur pour établir un mode d'attente, la première valeur étant supérieure à la deuxième valeur.

6. Système de palpage selon une des revendications précédentes, **caractérisé par le fait que** le circuit (S) est agencé de manière telle qu'un transformateur de tension (13) et un limiteur de tension (18) sont connectés entre la source de tension continue (12) et l'unité centrale (16), le limiteur de tension (18) étant branché entre le transformateur de tension (13) et l'unité centrale (16) pour réduire la tension d'entrée de l'unité centrale (16).

7. Système de palpage selon une des revendications précédentes, **caractérisé par le fait que** le circuit (S) est agencé de manière telle qu'un transformateur de tension (13) et un limiteur de tension (19) sont connectés entre la source de tension continue (12) et l'unité de détecteur (15), le limiteur de tension (19) étant branché entre le transformateur de tension (13) et l'unité de détecteur (15) pour réduire la tension d'entrée de l'unité de détecteur (15).

8. Système de palpage selon une des revendications précédentes, **caractérisé par le fait qu**'un limiteur de tension (19) est branché en amont de l'unité de détecteur (15), le limiteur de tension (19) permettant d'interrompre la liaison électrique entre la source de tension continue (12) et l'unité de détecteur (15) pour établir un mode d'attente.

9. Système de palpage selon une des revendications précédentes, **caractérisé par le fait que** le transformateur de tension (13) comprend un circuit amplificateur (13.1) et un limiteur de tension (13.2) qui protège le circuit amplificateur (13.1) contre des tensions (U₁₂) excessives.

10. Procédé d'utilisation d'un système de palpage où, dans une tête de palpage (10), une source de tension continue (12) alimente en énergie
- une unité de détecteur (15),
- une unité centrale (16),
- un étage émetteur (14),
sachant qu'en mode de service de mesure, la déviation d'une tige de palpage (11) située sur la tête de palpage (10) provoque le déclenchement, par l'unité de détecteur (15), d'un signal électrique qui est ensuite converti dans l'étage émetteur (14) en un signal électromagnétique qui est ensuite reçu par une unité d'émetteur-récepteur (30),
**caractérisé par le fait qu**'un transformateur de tension (13) génère une tension (U₁₃) qui est appliquée à l'étage émetteur (14) et est supérieure à la tension de sortie (U₁₂) de la source de tension continue (12).

11. Procédé d'utilisation d'un système de palpage selon la revendication 10, **caractérisé par le fait qu**'à la suite du mode de service de mesure, le système de palpage est amené dans un mode d'attente et pour établir ce mode d'attente, la tension de sortie (U₁₃) du transformateur de tension (13) est réglée à une valeur qui est inférieure à la valeur correspondante en mode de service de mesure.

12. Procédé d'utilisation d'un système de palpage selon une des revendications 10 ou 11, **caractérisé par le fait que** la tension (U₁₃) produite par le transformateur de tension (13) est ramenée par un limiteur de tension (19) à une tension d'entrée (U₁₈) réduite pour l'unité de détecteur (15).

13. Procédé d'utilisation d'un système de palpage selon la revendication 11, **caractérisé par le fait que** dans le cadre du passage du système de palpage au mode d'attente, un limiteur de tension (19) interrompt la liaison électrique entre la source de tension continue (12) et l'unité de détecteur (15).

14. Procédé d'utilisation d'un système de palpage selon une des revendications 10, 11, 12 ou 13, **caractérisé par le fait qu'**un limiteur de tension (18) réduit la tension d'entrée (U₁₈) de l'unité centrale (16).

15. Procédé d'utilisation d'un système de palpage selon une des revendications 10, 11, 12, 13 ou 14, **caractérisé par le fait qu**'un limiteur de tension (18) réduit la tension d'entrée (U₁₈) de l'étage récepteur (17).
